# EUROPÄISCHE PATENTANMELDUNG

(11) **EP 2 273 136 A2**
(43) Veröffentlichungstag der Anmeldung: **12.01.2011**
(21) Anmeldenummer: 10007046.5
(22) Anmeldetag: 08.07.2010
(51) Int. Cl.: F16B 19/02, E03F 1/00, F16B 5/06, F16B 4/00

(54) **Verbindung von durchströmbaren Platten sowie ein Verbindungsstift hierfür**

(30) Priorität: 08.07.2009 DE 202009005002 U
(71) Anmelder: Funke Kunststoffe GmbH, 59071 Hamm-Uentrop (DE)
(72) Erfinder: Funke, Norbert, 48324 Sendenhorst (DE); Funke, Hans Günter, 48324 Sendenhorst (DE)
(74) Vertreter: Habbel, Ludwig

(57) **Zusammenfassung**

Bei einer Verbindung zweier durchströmbarer Platten (2), welche flächig aneinander angeordnet sind, wobei die beiden Platten in einer Anordnung mit weiteren Platten vorliegen, weiche von einem Geotextil umgeben ist, wobei sich wenigstens ein Verbindungsstift (3) in die beiden Platten (2) erstreckt, derart, dass sich ein erster Eindringabschnitt des Verbindungsstiftes (3) in eine erste Platte erstreckt und ein zweiter Eindringabschnitt des Verbindungsstiftes in eine zweite Platte, wobei der erste Eindringabschnitt wahlweise in der ersten oder zweiten Platte angeordnet ist, und der zweite Eindringabschnitt dabei in der jeweils anderen Platte angeordnet ist, schlägt die Erfindung vor, dass der Verbindungsstift (3) als massiver Vollkörper ausgestaltet ist, welcher zwei unterschiedliche Querschnittsflächen aufweist.

## Beschreibung

Die Erfindung betrifft eine Verbindung nach dem Oberbegriff des Anspruchs 1.

Aus der Praxis ist es bekannt, aus Gitterplatten und/oder anderweitig ausgestalteten, durchströmbaren Platten Behälter herzustellen - wie beispielsweise einen Drainage-Tank. Derartige Tanks werden häufig aus so genannten Rigolen-Elementen zusammengesetzt. Hierbei werden so genannte Horizontal-Verbinder verwendet, um nebeneinander angeordnete Elemente gegen horizontales Verrutschen zu sichern. Um Elemente für eine mehrstöckige Ausführung eines Drainage-Tanks übereinander anzuordnen, werden so genannte Vertikal-Verbinder eingesetzt. Praxisüblich werden diese derart in eine im unteren Element vorgesehene Ausnehmung eingebracht, dass sie mit einem "freien" Abschnitt aus der Ausnehmung heraus ragen. Das darüber anzuordnende Element wird dann mit einer seinerseits für den Verbinder vorgesehenen Ausnehmung auf diesen freien Verbinder-Abschnitt aufgesteckt. Diese Vertikal-Verbinder dienen dabei auch als Positionier-Hilfe, um die jeweiligen "Stockwerke" des Tanks passgenau übereinander setzen zu können und sollen gleichzeitig durch ihre Sicherungsfunktion ein Verrutschen eines gesamten Stockwerkes in horizontaler Richtung verhindern.

Derartige Vertikal-Verbinder werden praxisüblich als Rohrstücke oder anderweitig ausgeformte Hohlkörper ausgestaltet. Ein solcher Hohlkörper wird zumeist unter Einsatz eines so genannten Kernes gegossen, was eine Gussform und somit die Herstellung eines Verbinders aufwändig und vergleichsweise teuer ausfallen lässt.

Ein beschriebenes Verrutschen einzelner Elemente oder Stockwerke ist unbedingt zu verhindern, da derartige Tanks von einem Geotextil umgeben sind und ein verrutschendes Tank-Element das Geotextil beschädigen könnte. Die sichere Funktion eines solchen Tanks kann somit gefährdet sein.

Bei den im Rahmen dieses Vorschlages genannten "durchströmbaren Platten" kann es sich beispielsweise um die für die Herstellung eines Drainage-Tanks üblichen Gitterplatten handeln, aber auch um Lochbleche oder andere Platten, welche eine Durchströmbarkeit für eine Flüssigkeit aufweisen - sei es über Durchbrechungen in der Platte oder über Kanäle, die Bestandteil der Platte sind.

Der Erfindung liegt die Aufgabe zugrunde, eine gattungsgemäße Verbindung derart zu verbessern, dass sie eine höhere Stabilität aufweist und die dazu erforderlichen Bauteile preisgünstig bereitzustellen sind.

Diese Aufgabe wird durch eine Verbindung mit den Merkmalen des Anspruches 1 und durch einen Verbindungsstift nach Anspruch 9 gelöst.

Die Erfindung schlägt mit anderen Worten vor, für eine flächige Verbindung zweier durchströmbarer Platten ein als Vollkörper ausgestaltetes Verbindungselement zu verwenden.

Eine Verbindung zweier Platten mit einem als Vollkörper ausgestalteten Verbindungsstift bietet mehrere Vorteile. Unter anderem den der gegenüber einem Hohlkörper-Verbinder erhöhten Stabilität eines Verbindungsstiftes gegenüber Knickbeanspruchung und ruckartigen Stößen, wie sie beim Einbau eines aus miteinander verbundenen Platten hergestellten Tanks auftreten können. Gerade dann, wenn ein vorschlagsgemäßer Verbindungsstift in besonders vorteilhafter Ausgestaltung aus Kunststoff besteht. Für die Herstellung derartiger Kunststoff-Kleinteile in großen Stückzahlen ist beispielsweise das Spritzgießen ein geeignetes und bewährtes Verfahren. Gerade durch die Ausgestaltung des Verbindungsstiftes als Vollkörper wird für die Gussform vorteilhaft kein Kern benötigt, was eine besonders wirtschaftliche Herstellung eines vorschlagsgemäßen Verbindungselementes ermöglicht.

Es kann vorgesehen sein, den Verbindungsstift mit leichtem bis deutlichem Spiel in eine Aufnahmeöffnung - also in den Sitz - einer Platte einzubringen. Jedoch kann es gerade dann, wenn ein Verbindungsstift in einer Platte gegen einen gewissen Widerstand sicher gegen unbeabsichtigtes Herauslösen geklemmt werden soll, vorteilhaft sein, den Verbindungsstift mit einem leichten Hammerschlag auf eines seiner beiden Enden in eine Platte einzubringen. Auch hier bietet ein massiv ausgestalteter Verbindungsstift eine deutlich höhere Stabilität, während bei einem Hohlkörper - gerade bei niedrigen Temperaturen - die Gefahr eines Wandungsbruches gegeben ist.

Die Eindringabschnitte eines vorschlagsgemäßen Verbindungsstiftes können in Größe und Querschnittsform unterschiedlich ausgestaltet sein, dabei jedoch stets derart, dass sie wahlweise in den jeweiligen Sitz beider miteinander zu verbindender Platten einbringbar sind. So kann beispielsweise - bei gleicher Ausgestaltung der Sitze in den Platten - der Verbindungsstift am einen Eindringabschnitt geklemmt, und im anderen Eindringabschnitt lediglich mit leichtem Spiel sitzend eingeführt sein.

Bedingt dadurch, dass ein vorschlagsgemäßer massiver Verbindungsstift eine vorteilhaft hohe Stabilität aufweist, ist es möglich, diesen deutlich kleiner auszugestalten, als die praxisüblichen Verbinder aus einem Hohlkörper. Dies ermöglicht Einsparungen hinsichtlich des Materialaufwandes für dessen Herstellung sowie beim Raumbedarf für Verpackung und/oder Transport von Verbindungsstiften und der damit verbundenen Kosten. Dies wiederum kann die Bereitstellungskosten für vorschlagsgemäße Verbindungsstifte senken, was bei einem Masseartikel wie diesem besonders vorteilhaft ist.

Da es sich bei einem vorschlagsgemäßen Verbindungsstift um einen Vollkörper handelt, welcher deutlich stabiler ausgestaltet ist, als ein praxisüblicher Hohlkörper-Verbinder, kann hierfür auf eine spezielle Materialauswahl verzichtet werden und besonders vorteilhaft ein so genanntes Recyclat, also ein Recycling-Werkstoff, für dessen Herstellung verwendet werden. Hierbei kann der Verbindungsstift teilweise oder komplett aus einem Recycling-Material bestehen. Ein solches Recyclat ist häufig deutlich preisgünstiger zu beschaffen und kann aus beinah beliebigen Kunst- oder Mischstoffen zusammengesetzt sein, was neben einer Ressourcenschonung die Herstellungskosten eines solchen Verbindungsstiftes deutlich verringern kann.

In beispielhafter Ausgestaltung weist ein vorschlagsgemäßer Verbindungsstift zwei Abschnitte mit unterschiedlich großen Querschnittsflächen auf. Beispielhaft mit zwei axial aneinander angrenzenden Abschnitten, wobei der erste Abschnitt mit einer geringfügig größeren Querschnittsfläche zum Klemmen in einer ersten Platte ausgelegt ist und der zweite Abschnitt zum lockeren Einführen in eine zweite Platte eine geringfügig kleinere Querschnittsfläche aufweist. Somit ist der Verbindungsstift vorteilhaft gegen unbeabsichtigtes Herausfallen gesichert, nachdem der Abschnitt mit der größeren Querschnittsfläche in die Platte eingebracht wurde. Die Platten können im Bereich des Sitzes, in welchen jeweils die entsprechenden Abschnitte des Stiftes eingebracht werden, in Maß und Form vorteilhaft gleich ausgestaltet sein.

In besonders vorteilhafter Ausgestaltung kann der größere Abschnitt einen so genannten Bund - beispielhaft in zylindrischer Form - ausbilden, von dessen jeweiliger Stirnseite aus sich in jede Richtung je ein weiterer, kleinerer Abschnitt erstreckt, welcher ebenfalls zylindrisch ausgestaltet sein kann. Wurde der Verbindungsstift mit dem Bund in eine Platte eingebracht, kann er sich mit diesem an einer Stirnfläche im Sitz oder anderweitig an der Platte abstützen und ist somit effektiv gegen ein Verrutschen und/oder Herausfallen aus der Platte gesichert. Durch einen Bund mit großer Querschnittsfläche kann ein vorschlagsgemäßer Verbindungsstift Abscherkräften einen besonders hohen Widerstand bieten und ermöglicht eine zuverlässige Verbindung der jeweiligen Tankelemente.

Besonders vorteilhaft kann ein vorschlagsgemäßer Verbindungsstift wenigstens einen sich verjüngenden Abschnitt aufweisen. Beispielhaft in Ausgestaltung einer Einführschräge, welche ein erleichtertes Aneinanderbringen zweier Tankelemente ermöglicht. Soll ein Tankelement mit dem dafür vorgesehenen Sitz auf einen bereits in ein weiteres Tankelement eingebrachten Verbindungsstift aufgesetzt werden, so kann die Einführschräge das "Einfädeln" in den Sitz deutlich erleichtern und damit den Herstellungsprozess eines Tanks beschleunigen. Gerade dann, wenn ein solches Element 'schief' auf ein anderes aufgesetzt wird, kann eine derartige Einführschräge Beschädigungen am Stift oder an der Platte effektiv verhindern. Daher kann ein Verbindungsstift vorteilhaft an jedem Ende eine derartige Einführschräge aufweisen. Im funktionellen Sinn als Hilfestellung für das so genannte Einfädeln kann ein Verbindungselement ebenso eine Halbkugelform, eine Linsenform oder eine andere, sich verjüngende Ausformungen aufweisen.

Es kann sich bei dem sich verjüngenden Abschnitt jedoch auch um den Teil des Eindringabschnittes handeln, welcher einem formentsprechenden Sitz anliegt. Zu diesem Zweck kann der sich verjüngende Abschnitt vorteilhaft länger ausgestaltet sein, als bei seiner Ausführung als Einführschräge.

In einer vorteilhaften Ausgestaltung kann ein Verbindungsstift zwei sich verjüngende Abschnitte aufweisen - beispielhaft in Ausgestaltung von sich zu den Enden des Stiftes verjüngenden Kegelstümpfen, welche jeweils in formentsprechende Sitze in den Platten eingesetzt werden. Derartige, sich verjüngende Formen eignen sich wegen ihrer guten Lösbarkeit aus der Gussform besonders gut für eine Fertigung durch ein Gießverfahren, was eine leichtere Herstellung eines vorschlagsgemäßen Verbindungsstiftes ermöglicht.

Um einen Verbindungsstift gegen das eingangs bereits erwähnte unbeabsichtigte Herauslösen aus einer Platte in deren Sitz sichern zu können, kann er besonders vorteilhaft eine reibfreudige Oberfläche aufweisen. Dies kann beispielhaft durch eine teil- oder abschnittweise aufgebrachte Beschichtung, eine "mechanische" Aufrauung oder eine Profilierung, wie beispielsweise einem Rändel, erreicht werden. Ist vorgesehen, nur eine von mehreren Abschnitten mit einer reibfreudigen Oberfläche auszugestalten, so kann diese beispielsweise eine Farbkennzeichnung aufweisen. Dies ermöglicht dem Monteur am Einbauort eine schnelle Erkennung der gewünschten "Einbaurichtung" des Verbindungsstiftes.

Weist ein Verbindungsstift einen kreisrunden Querschnitt auf, ist dies besonders vorteilhaft für die Herstellung des Stiftes beim Spritzgießen, da die dafür verwendete Form vorteilhaft einfach gehalten sein und daher preiswert herzustellen ist. Der Stift kann in dieser Ausgestaltung - bezogen auf dessen Rotationsachse - in beliebiger Einbaulage eingebracht werden und muss nicht vor dem Einbringen ausgerichtet werden, was der Fall wäre, wenn Stift und Sitz formübereinstimmend unrund ausgestaltet wären. Eine kreisrunde Geometrie ermöglicht eine Arbeitszeitersparnis an der Einbaustelle und somit eine wirtschaftliche Bereitstellung eines damit hergestellten Tanks. Ebenso ist es von Vorteil, dass ein vorschlagsgemäßer Verbindungsstift mit jedem seiner dafür vorgesehenen Eindringabschnitte beliebig in einen dafür vorgesehenen Sitz einer Platte einbaubar ist. Die für einen Tank verwendeten Platten müssen auch nicht verschieden ausgestaltete Ausnehmungen aufweisen, sondern können vorteilhaft an diesen Stellen gleich ausgestaltet sein, was Fehler beim Einbau vermeiden kann.

Wie bereits vorhergehend beschrieben kann der Verbindungsstift - bei gleicher Ausgestaltung der jeweiligen Sitze in den Platten - derart ausgestaltet sein, dass er abschnittsweise in einer Platte einen Klemmsitz aufweist und in der jeweils anderen Platte lediglich locker eingeführt ist. Diese "Klemm-Funktion" kann jedoch auch über unterschiedlich ausgestaltete Sitze in den jeweiligen Platten realisiert werden. Hierbei kann vorgesehen sein, in einem für das Aufnehmen eines Verbindungsstiftes vorgesehenen Sitz einer Platte, eine Art Nase, einen umlaufenden Ring oder eine andere abschnittsweise Beschränkung der Sitz-Innenraumes vorzusehen, in welcher das Verbindungselement geklemmt oder gehalten wird. Die Platten sind hierbei beispielhaft bereits werkseitig derart in einem Tank-Element verbaut, dass sich bei der Herstellung eines Tanks aus mehreren Elementen zwangsläufig eine Kombination mit je einem Klemmsitz und einer losen Führung im Sitz ergibt.

Vorteilhaft kannn jedoch ein eingesetzter Verbindungsstift durch seine darauf ausgelegte Ausgestaltung ursächlich sein für das Erzielen einer derartigen Kombination mit einem Klemmsitz und einer losen Führung im Sitz, da hiermit bei beibehaltener Ausgestaltung der Platten die mit ihnen hergestellten Tankelemente untereinander beliebig kombiniert werden können. Dies ermöglicht auch eine problemlose Nachrüstbarkeit - auch von bereits kundenseitig vorhandenen Beständen - mit vorschlagsgemäßen Verbindungsstiften.

In welcher Weise die Kombination einer Verbindung mit je einem Klemmsitz und einer losen Führung im Sitz realisiert wird, kann kundenspezifisch oder bedarfsgerecht bestimmt werden. Wird beispielsweise ein Tank dadurch erstellt, dass - wie eingangs beschrieben - mehrere aus Einzelelementen gebildete Stockwerke übereinander gesetzt werden, kann vorgesehen sein, den Klemmsitz im jeweils aufzusetzenden Stockwerk vorzusehen. Die Verbindungsstifte werden hierbei vor dem Aufsetzen eines Elementes - in Einbaulage betrachtet - unterseitig in dieses klemmend eingebracht und anschließend in das bereits vorgesehene, untere Stockwerk locker eingeführt. Gerade bei weiträumigem Einbau eines solchen Tanks mit einer großen Gesamtfläche kann während der Herstellung eine Begehbarkeit der Stockwerke erforderlich sein, um weitere Stockwerke aufzusetzen oder um das Geotextil anzubringen. Um diese Begehbarkeit uneingeschränkt zu ermöglichen, ist diese Ausführung besonders geeignet. Wird ein bereits eingebautes Einzelelement wieder entnommen - beispielsweise, um an einen anderen Ort versetzt zu werden - verbleibt der Verbindungsstift sicher geklemmt in der Platte des zu versetzenden Elementes und das Element kann an anderer Stelle eingesetzt werden.

Als Aufnahmeöffnung oder Sitz wird hier der Bereich einer Platte bezeichnet, in welchen ein vorschlagsgemäßer Verbindungsstift eingesetzt ist. Diese Aufnahmeöffnung kann durch einen eigens zu diesem Zweck in die Platte eingearbeiteter Abschnitt sein, beispielhaft in Form einer materialeinheitlich gegossenen Buchse. Es kann sich aber - in besonders preisgünstiger Ausgestaltung - auch um einen offenen Bereich der Gitterstruktur einer Gitterplatte oder um eine Durchbrechung in einem Lochblech oder ähnlichem handeln, in welchen ein Verbindungsstift eingebracht wird und somit eine vorschlaggemäße Verbindung schafft.

Eine vorschlagsgemäße Anordnung mehrerer Platten kann beispielsweise durch einen der erwähnten Drainage-Tanks verwirklicht sein. Dieser Tank ist dabei aus mehreren Einzelelementen zusammengesetzt ist, wobei diese Einzelelemente über die in die Platten eingebrachten Verbindungsstifte miteinander verbunden sind. Diese Verbindungen ermöglichen einen sicheren Zusammenhalt zwischen den Einzelelementen, wodurch ein Tank seine gewünschte hohe Stabilität erhält, und bietet so eine zuverlässige Sicherung gegen Verrutschen oder Verschieben der Elemente. Zwar eignet sich ein vorschlagsgemäßes Verbindungselement vorrangig für die Verbindung übereinander angebrachter Einzelelemente, wobei das Verbindungselement in aufrechter Position eingebracht ist, jedoch kann es ebenso zur Sicherung in einer liegenden Position verwendet werden.

Eine vorschlagsgemäße Verbindung oder ein vorschlagsgemäßer Verbindungsstift eignen sich ebenso für die Herstellung von anderweitig durchströmbaren Anordnungen, wie beispielsweise Entwässerungsrinnen oder ähnlichem, deren Bauform nicht der eines Tanks oder Behälters entspricht. Dies gilt auch dann, wenn diese nicht oder nur teilweise mit einem Geotextil versehen sind.

Ausführungsbeispiele des vorliegenden Vorschlags werden anhand der rein schematischen Darstellungen nachfolgend näher erläutert. Dabei zeigt
- Fig. 1 - 4: jeweils eine Verbindung zweier Platten mit einem Verbindungsstift in einer Seitenansicht, und
- Fig. 5: eine Draufsicht auf einen in eine Platte eingebrach- ten Verbindungsstift.

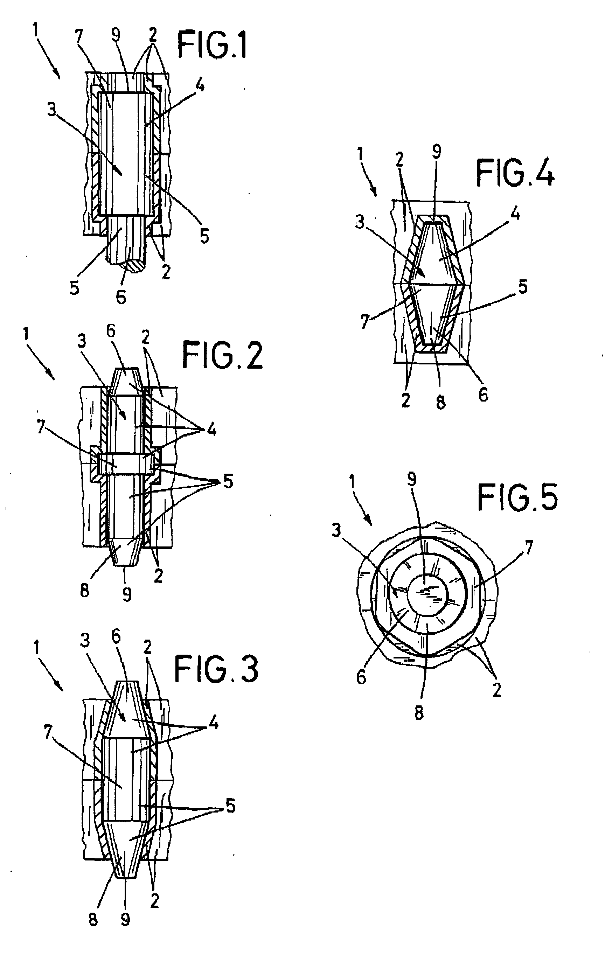

In den Fig. 1 bis Fig. 4 ist jeweils eine Verbindung 1 zweier durchströmbarer Platten 2 - hier in einer beispielhaften Ausführung als Gitterplatten - mit einem Verbindungsstift 3 dargestellt, Die Platten 2, die jeweils einen im Schnitt dargestellten Sitz für den Verbindungsstift 3 ausbilden, liegen dabei flächig aneinander - hier wie praxisüblich übereinander - während sich der Verbindungsstift 3 mit seinem ersten Eindringabschnitt 4 in die eine, und dem zweiten Eindringabschnitt 5 in die andere Platte 2 erstreckt. Die hier dargestellten Verbindungsstifte 3 können mit ihren Eindringabschnitten 4 und 5 wahlweise in der einen oder anderen Platte 2 angeordnet sein, wobei der jeweils andere Eindringabschnitt 4,5 in der jeweils anderen Platte angeordnet ist, wodurch die Platten 2 mit ihren Sitzen für den Verbindungsstift 3 vorteilhaft gleich ausgeführt sind.

Bei dem in Fig. 1 dargestellten Verbindungsstift 3 bildet der - hier obere - zylindrische Bereich mit der größeren Querschnittsfläche 7 zugleich den ersten Eindringabschnitt 4 sowie auch den zweiten Eindringabschnitt 5 aus und erstreckt sich damit jeweils in eine der Platten 2. Der zylindrische Bereich mit der kleineren Querschnittsfläche 6, welcher hier nur teilweise dargestellt ist, bildet einen weiteren Anteil des zweiten Eindringabschnittes 5 und ragt aus der - hier unteren - Platte 2 heraus. Mit seinem oberen Ende 9 liegt der Verbindungsstift 3 an einem Absatz im Sitz der oberen Platte 2 an.
Fig. 2 zeigt eine Verbindung 1 zweier Platten 2 mit einem Verbindungsstift 3, welcher vorschlagsgemäß einen zylindrischen Bund aufweist, welcher von einem Abschnitt mit der größeren Querschnittsfläche 7 ausgebildet wird. Von dem Bund aus erstrecken sich axial je ein Abschnitt mit kleinerer Querschnittsfläche 6 in jede Richtung. An jedem seiner Enden 9 weist der Verbindungsstift einen sich zu dem Ende 9 verjüngenden Abschnitt 8 auf, welcher ein erleichtertes Aneinanderbringen der beiden Platten 2 ermöglicht.
Fig. 3 zeigt eine Verbindung 1 zweier Platten 2mit einem Stift in einer Ausführung ähnlich dem aus Fig. 2, bei welchem der Abschnitt mit der größeren Querschnittsfläche 7 keinen Bund ausbildet, sondern lediglich einen zylinderförmigen Bereich. Ein Abschnitt mit der kleineren Querschnittsfläche 6 liegt dabei jeweils in dem sich zum Ende 9 des Verbindungsstiftes 3 verjüngenden Abschnitt 8. Der erste Eindringabschnitt 4 wird hierbei von dem - hier oben dargestellten - sich verjüngenden Abschnitt 8 sowie einem Anteil des zylindrischen Bereiches gebildet, welcher - gemeinsam mit dem hier unten dargestellten, sich verjüngenden Bereich 8 - zugleich anteilig den zweiten Eindringabschnitt 5 ausbildet.
In Fig. 4 ist eine Verbindung 1 zweier Platten 2 mit einem Verbindungsstift 3 dargestellt, welcher zwei sich jeweils zu einem der Enden 9 verjüngende Abschnitte in Art eines Kegelstumpfes aufweist. Jeder der sich verjüngenden Abschnitte 8 weist zugleich einen Abschnitt mit einer kleineren Querschnittsfläche 6 sowie einen Abschnitt mit einer größeren Querschnittsfläche 7 auf. Der hier obere Kegelstumpf bildet hierbei den ersten Eindringabschnitt 4, wobei der untere Kegelstumpf den zweiten Eindringabschnitt 5 bildet.
Fig. 5 zeigt in einer Draufsicht einen in eine Platte 2 eingebrachten Verbindungsstift 3, dessen Bereich mit dem größeren Querschnitt 7 einen Bund ausbildet. Dieser Bund ist ähnlich einem Polygon, aber mit stark verrundeten Ecken ausgebildet. Das "Eckenmaß" des Bundes ist dabei etwas größer als der Innendurchmesser des zylindrischen Sitzes in der Platte 2. Der Verbindungsstift 3 ist mit etwas Druck in den Sitz der Platte 2 eingebracht und bildet dadurch eine stabile Verbindung. Die in Blickrichtung vordere Platte 2 ist aus Übersichtlichkeitsgründen nicht dargestellt.

In den Darstellungen sind die Körperkanten von Verbindungsstiften 3 und Platten 2 der besseren Übersichtlichkeit halber rein schematisch dargestellt. Es können aber fertigungsspezifische Rundungen und/oder Konturübergänge an den Bauteilen vorgesehen sein, wie sie beispielsweise an Gussteilen üblich sind. Die Bezeichnungen "Seitenansicht" und "Draufsicht" beziehen sich hier lediglich auf den jeweils dargestellten Einbaufall, schränken aber den Anwendungsfall und die jeweilige Einbaulage einer vorschlagsgemäßen Verbindung nicht darauf ein.

## Patentansprüche

1. Verbindung zweier durchströmbarer Platten,
welche flächig aneinander angeordnet sind, wobei die beiden Platten in einer Anordnung mit weiteren Platten vorliegen, welche von einem Geotextil umgeben ist, wobei sich wenigstens ein Verbindungsstift in die beiden Platten erstreckt, derart,
dass sich ein erster Eindringabschnitt des Verbindungsstiftes in eine erste Platte erstreckt und ein zweiter Eindringabschnitt des Verbindungsstiftes in eine zweite Platte, wobei der erste Eindringabschnitt wahlweise in der ersten oder zweiten Platte angeordnet ist, und
der zweite Eindringabschnitt dabei in der jeweils anderen Platte angeordnet ist,
**dadurch gekennzeichnet,**
**dass** der Verbindungsstift (3) als massiver Vollkörper ausgestaltet ist,
welcher zwei unterschiedliche Querschnittsflächen (6,7) aufweist.

2. Verbindung nach Anspruch 1,
**dadurch gekennzeichnet,**
**dass** der Verbindungsstift (3) ein Recyclat enthält.

3. Verbindung nach Anspruch 1 oder 2,
**dadurch gekennzeichnet,**
**dass** der Verbindungsstift (3) wenigstens zwei Abschnitte mit unterschiedlich großen Querschnittsflächen (6,7) aufweist.

4. Verbindung nach Anspruch 3,
**dadurch gekennzeichnet,**
**dass** der Abschnitt des Verbindungsstiftes (3) mit der größeren Querschnittsfläche (7) einen Bund ausbildet, welcher einen das Einführen eines Eindringabschnitts (4,5) in die zugeordnete Platte (2) begrenzenden Anschlag bildet, wobei von den beiden Stirnseiten des Bundes aus sich jeweils ein Abschnitt mit einer kleineren Querschnittsfläche (6) axial in jeweils eine Richtung erstreckt.

5. Verbindung nach einem der vorhergehenden Ansprüche,
**gekennzeichnet durch**
wenigstens einen, sich zu einem Ende des Verbindungsstiftes (3) verjüngenden, das Einführen in die zugeordnete Platte (2) erleichternden Abschnitt (8) des Verbindungsstiftes (3).

6. Verbindung nach einem der vorhergehenden Ansprüche,
**gekennzeichnet durch**
eine wenigstens abschnittsweise reibfreudige, den Halt in der zugeordneten Platte (2) verbessernde Oberfläche des Verbindungsstiftes (3).

7. Verbindung nach einem der vorhergehenden Ansprüche, **dadurch gekennzeichnet, dass**
der Verbindungsstift (3) wenigstens einen Abschnitt mit kreisrunder Geometrie aufweist.

8. Verbindung nach einem der vorhergehenden Ansprüche,
**dadurch gekennzeichnet, dass**
in den beiden Platten (2) jeweils eine Aufnahmeöffnung für den jeweiligen Eindringabschnitt (4,5) des Verbindungsstiftes (3) vorgesehen ist,
wobei der eine Eindringabschnitt (4,5) des Verbindungsstiftes (3) in seiner zugeordneten Aufnahmeöffnung mittels eines Klemmsitzes gehalten ist,
und der andere Eindringabschnitt (4,5) des Verbindungsstiftes (3) in seiner zugeordneten Aufnahmeöffnung lose geführt ist.

9. Verbindungsstift (3) einer Verbindung (1) nach einem der vorhergehenden Ansprüche.
